# EUROPÄISCHE PATENTSCHRIFT

(11) **EP 4 266 231 B1**
(45) Veröffentlichungstag und Bekanntmachung des Hinweises auf die Patenterteilung: **15.10.2025**
(21) Anmeldenummer: 23166457.4
(22) Anmeldetag: 04.04.2023
(51) Int. Cl.: G06Q 10/20, G06F 8/61, G06F 9/445

(54) **VERFAHREN ZUM BETREIBEN EINER STEUERVORRICHTUNG FÜR EIN KRAFTFAHRZEUG**
METHOD FOR OPERATING A CONTROL DEVICE FOR A MOTOR VEHICLE
PROCÉDÉ DE FONCTIONNEMENT D'UN DISPOSITIF DE COMMANDE POUR UN VÉHICULE AUTOMOBILE

(30) Priorität: 21.04.2022 DE 102022109637
(43) Veröffentlichungstag der Anmeldung: 25.10.2023
(73) Patentinhaber: AUDI AG, 85057 Ingolstadt (DE)
(72) Erfinder: Lang, Johannes, 91099 Poxdorf (DE); Tischendorf, Claudia, 85053 Ingolstadt (DE)
(74) Vertreter: Hofstetter, Schurack & Partner

(56) Entgegenhaltungen:
- WO-A1-2017/036551
- DE-A1- 102019 108 602
- US-A1- 2005 027 846
- US-A1- 2006 048 139
- US-A1- 2010 017 505
- US-A1- 2014 245 286
- US-A1- 2016 357 545

## Beschreibung

Die Erfindung betrifft ein Verfahren zum Betreiben einer Steuervorrichtung für ein Kraftfahrzeug. Zudem betrifft die Erfindung ein Kraftfahrzeug, das dazu ausgebildet ist, die für ein Kraftfahrzeug vorgesehenen Schritte eines derartigen Verfahrens durchzuführen.

Ein Kraftfahrzeug kann eine Steuervorrichtung aufweisen, in der Software bereitgestellt ist, bei deren Ausführung eine Funktion des Kraftfahrzeugs bereitgestellt werden kann. Eine derartige Funktion ist beispielsweise eine Komfortfunktion. Die Komfortfunktion kann zum Beispiel ein Wetterdienst, der Informationen zum Wetter in einer Umgebung des Kraftfahrzeugs bereitstellt, und/oder ein Parkplatzinformationsdienst, der eine Information über einen freien Parkplatz an einem Zielort des Kraftfahrzeugs bereitstellt, sein. Die Funktion kann alternativ oder zusätzlich dazu fahrbezogen sein, wie zum Beispiel ein Fahrerassistenzsystem.

Die DE 11 2014 006 613 T5 zeigt eine Benutzerschnittstelle, die einen Funktions-Mittel-Speicherabschnitt, der Kandidaten für eine Vielzahl von Funktionen und für eine Vielzahl von Bedienmitteln zum Ausgeben einer Instruktion zum Ausführen von Funktionen speichert, einen Schätzungsabschnitt, der eine Funktion, die vom Benutzer beabsichtigt ist, und das Bedienmittel unter den gespeicherten Kandidaten basierend auf mit einer aktuellen Situation verknüpften Informationen schätzt, und einen Präsentationsabschnitt zum Präsentieren des Kandidaten für die vom Schätzungsabschnitt geschätzte Funktion zusammen mit dem Kandidaten für das Bedienmittel umfasst.

Die US 2014/0245286 A1 zeigt ein System und ein Verfahren, das in einem elektronischen Gerät zur Verwaltung einer Anzahl von in dem elektronischen Gerät installierten Anwendungen verwendet wird. Dieses Anwendungsverwaltungssystem umfasst ein Erfassungsmodul und ein Deinstallationsmodul.

Die US 2010/017505 A1 zeigt ein Anwendungsaktualisierungs-Verwaltungsterminal zum Verwalten der Aktualisierung von Anwendungen.

Es ist die Aufgabe der Erfindung, eine Lösung bereitzustellen, mittels derer effizient eine Steuervorrichtung für ein Kraftfahrzeug betrieben werden kann.

Die Aufgabe wird durch die Gegenstände der unabhängigen Patentansprüche gelöst. Mögliche Ausgestaltungen der Erfindung sind in den abhängigen Ansprüchen, der folgenden Beschreibung und den Figuren angegeben.

Ein erster Aspekt der Erfindung betrifft ein Verfahren zum Betreiben einer Steuervorrichtung für ein Kraftfahrzeug. Die Steuervorrichtung ist beispielsweise eine zentrale Recheneinrichtung im Kraftfahrzeug. In der Steuervorrichtung ist eine erste Software bereitgestellt, mittels derer zumindest eine Funktion für das Kraftfahrzeug ausführbar ist. Die Funktion ist beispielsweise eine Komfortfunktion, insbesondere eine Komfortfunktion mit einem Navigations- und/oder Standortbezug, wie zum Beispiel ein Wetterdienst, der Informationen zum Wetter in einer Umgebung des Kraftfahrzeugs bereitstellt, und/oder ein Parkplatzinformationsdienst, der eine Information über einen freien Parkplatz an einem Zielort des Kraftfahrzeugs bereitstellt. Alternativ oder zusätzlich dazu kann die Funktion eine Klimaanlage, eine Heizung, insbesondere eine Sitzheizung, und/oder eine Multimediaeinrichtung des Kraftfahrzeugs betreffen. Die Funktion ist bevorzugt eine Funktion, die aktiv von einem Benutzer des Kraftfahrzeugs, wie beispielsweise einem Fahrer, aktiviert werden muss. Die Funktion ist bevorzugt nicht systemrelevant für das Kraftfahrzeug, das heißt sie wird vom Kraftfahrzeug bevorzugt nicht zwangsläufig benötigt, um eine Fahrfunktion des Kraftfahrzeugs bereitstellen zu können.

Der Erfindung liegt die Erkenntnis zugrunde, dass eine Anzahl an mittels der ersten Software bereitgestellten Funktionen sowie deren jeweiliger Umfang hardwaretechnisch durch einen Speicher der Steuervorrichtung begrenzt ist. Zudem kann eine Prozessorlast der Steuervorrichtung bei einer großen Anzahl von Funktionen stets ausgelastet sein, falls beispielsweise zumindest eine der Funktionen als Hintergrundfunktion ständig aktiviert ist, sodass beispielsweise für das Aktivieren einer weiteren Funktion nicht ausreichend Prozessorlast zur Verfügung stehen kann. Es kann daher sinnvoll sein, die Anzahl an und/oder den Umfang der Funktionen, die mittels der ersten Software bereitgestellt sind, zu überprüfen und gegebenenfalls zu reduzieren.

In einem ersten Verfahrensschritt erfolgt ein Ermitteln von Nutzungsdaten, die für eine jeweilige Funktion, die von der der Steuervorrichtung bereitgestellten ersten Software bereitstellbar ist, ein Nutzungsverhalten beschreibt. Die Nutzungsdaten können beispielsweise beschreiben, wie oft die Funktion in einem vorgegebenen Zeitintervall benutzt wurde. Alternativ oder zusätzlich dazu können die Nutzungsdaten nur beschreiben, ob die jeweilige Funktion mindestens einmal verwendet wurde oder nicht. Das Nutzen der Funktion umfasst beispielsweise ein Aktivieren, Verwenden und/oder Deaktivieren der Funktion durch den Benutzer des Kraftfahrzeugs. Das Nutzungsverhalten gibt also eine Verwendung der jeweiligen Funktion im Kraftfahrzeug an. Das Ermitteln der Nutzungsdaten kann mittels der Steuervorrichtung erfolgen.

Ein weiterer Verfahrensschritt sieht ein Überprüfen für die jeweilige Funktion vor, wobei das Überprüfen mittels der Steuervorrichtung erfolgen kann. Es wird hierbei überprüft, ob gemäß der ermittelten Nutzungsdaten die Nutzung innerhalb einer vorgegebenen Minimalnutzung liegt. Die vorgegebene Minimalnutzung kann beispielsweise vorsehen, dass die Funktion in der Vergangenheit zumindest einmal genutzt wurde. Falls beispielsweise die Funktion bisher noch nie benutzt wurde, beschreiben ihre Nutzungsdaten eine Nutzung, die zum Beispiel unterhalb der vorgegebenen Minimalnutzung liegt. In diesem Fall wäre das Überprüfen für die jeweilige Funktion erfolgreich. Falls die Funktion jedoch beispielsweise in der Vergangenheit mehrmals genutzt wurde, können die Nutzungsdaten eine Nutzung beschreiben, die oberhalb der Minimalnutzung liegt. In diesem Fall wäre das Überprüfen erfolglos, das heißt das Überprüfen würde ein negatives Ergebnis aufweisen.

Für jede Funktion, für die beim Überprüfen festgestellt wurde, dass die Nutzung unterhalb der vorgegebenen Minimalnutzung liegt, erfolgt ein Bereitstellen einer Entfernungsoption zum zumindest teilweisen Entfernen der Funktion von der Steuervorrichtung. Wenn das Überprüfen also erfolgreich war, wird die Entfernungsoption beispielsweise als Hinweis im Kraftfahrzeug ausgegeben. Die Entfernungsoption kann beispielsweise eine optisch wahrnehmbare und/oder akustisch wahrnehmbare Nachricht sein, die mittels einer Ausgabeeinrichtung im Kraftfahrzeug bereitgestellt wird. Die Ausgabeeinrichtung kann zum Beispiel eine Anzeigeeinrichtung sein, wie ein Bildschirm, insbesondere ein berührungssensitiver Bildschirm, und/oder eine Lautsprechereinrichtung im Kraftfahrzeug, die zumindest einen Lautsprecher aufweist. Die Ausgabeeinrichtung kann eine Komponente des Kraftfahrzeugs sein und/oder eine Komponente eines mobilen Endgeräts, das im Kraftfahrzeug positioniert ist. Alternativ oder zusätzlich dazu kann die Entfernungsoption mittels der Ausgabeeinrichtung des mobilen Endgeräts positionsunabhängig bereitgestellt werden, das heißt beispielsweise außerhalb des Kraftfahrzeugs. In diesem Fall kann auf dem mobilen Endgerät eine Applikation installiert sein, über die ein Benutzerprofil des Benutzers für das Kraftfahrzeug verwaltet wird. Das mobile Endgerät ist beispielsweise ein Smartphone und/oder ein Tablet.

Das Entfernen von der Steuervorrichtung sieht zumindest vor, dass die Funktion nach dem Entfernen nicht mehr mittels der Steuervorrichtung ausgeführt werden kann. Es kann jedoch weiterhin in der Steuervorrichtung hinterlegt sein, dass die Funktion prinzipiell existiert. Deshalb kann die Funktion nur teilweise entfernt sein, da beispielsweise weiterhin eine Referenz auf die Funktion in der Steuervorrichtung gespeichert sein kann, jedoch nicht ein zum Ausführen der Funktion benötigter Softwarebaustein.

Falls die bereitgestellte Entfernungsoption aktiviert wird, erfolgt ein Bereitstellen einer zweiten Software für die Steuervorrichtung, mittels derer die jeweilige entfernte Funktion nicht ausführbar ist. Die zweite Software wird anstelle der ersten Software auf die Steuervorrichtung geladen, sodass die Steuervorrichtung nur noch mittels der bereitgestellten zweiten Software betrieben wird und nicht mehr mittels der ersten Software. Die erste und zweite Software sind voneinander verschieden. Die beiden Softwaren unterscheiden sich also in zumindest einem Softwarebaustein voneinander. Das Aktivieren der Entfernungsoption erfolgt bevorzugt manuell durch den Benutzer des Kraftfahrzeugs. Zum Aktivieren der Entfernungsoption kann eine Betätigungseinrichtung vorgesehen sein, wie beispielsweise ein Knopf, ein Schalter, ein Drehdrückschalter und/oder ein Element auf dem berührungssensitiven Bildschirm. Alternativ oder zusätzlich dazu kann eine Betätigung der Betätigungseinrichtung durch eine Sprachansteuerung basierend auf einer Mikrofoneinrichtung mit zumindest einem Mikrofon im Kraftfahrzeug und/oder durch eine Gestensteuerung basierend auf einer Kameraeinrichtung mit zumindest einer Kamera im Kraftfahrzeug erfolgen. Die Betätigungseinrichtung kann eine Komponente des Kraftfahrzeugs und/oder eine Komponente des mobilen Endgeräts sein. Die Betätigungseinrichtung kann der Ausgabeeinrichtung zugeordnet sein und/oder von dieser umfasst sein.

Es wird also im Kraftfahrzeug mit der zweiten Software eine neue Software bereitgestellt, gemäß der die nicht mehr gewünschte Funktion nicht mehr bereitgestellt ist, da diese beispielsweise aus der Software entfernt wurde. Hierdurch wird beispielsweise freier Speicherplatz in der Steuervorrichtung gewonnen, der beispielsweise für neue Funktionen für das Kraftfahrzeug und/oder für ein Softwareupdate der zweiten Software genutzt werden kann. Außerdem kann hierdurch die Prozessorlast der Steuervorrichtung reduziert werden, da beispielsweise die entfernte Funktion nicht mehr im Hintergrund von der Steuervorrichtung ausgeführt wird. Hierdurch wird letztendlich eine besonders vorteilhafte Speicherressourcensteuerung und Auslastungsverteilung für die Steuervorrichtung des Kraftfahrzeugs erreicht. Somit wird die Steuervorrichtung für das Kraftfahrzeug effizient betrieben.

Es kann vorgesehen sein, dass das Aktivieren der Entfernungsoption automatisch erfolgt, sodass kein manueller Beitrag zum Aktivieren der Entfernungsoption vom Benutzer des Kraftfahrzeugs benötigt wird. Es ist jedoch bevorzugt vorgesehen, dass der Benutzer aktiv entscheiden kann, ob er die Entfernungsoption annehmen will, das heißt, ob die zumindest eine Funktion entfernt werden soll oder nicht.

Die Erfindung sieht vor, dass die ermittelten Nutzungsdaten das Nutzungsverhalten während eines vorgegebenen Zeitintervalls beschreiben. Das Zeitintervall kann beispielsweise einen Monat, drei Monate oder ein halbes Jahr betragen. Alternativ oder zusätzlich dazu ist ein kleineres Zeitintervall, beispielsweise von einer, zwei oder drei Wochen, oder ein größeres Zeitintervall, beispielsweise von einem Jahr, zwei Jahren oder drei Jahren, möglich. Es kann alternativ ein beliebiges Zeitintervall zwischen den genannten Werten gewählt werden.

Das Zeitintervall ist funktionsabhängig. Es ist also vorgesehen, dass das Zeitintervall von der Funktion, für die die Nutzungsdaten ermittelt werden, abhängt. Dies ist insbesondere bei jahreszeitabhängigen Funktionen sinnvoll, die beispielsweise die Klimaanlage oder die Heizung im Kraftfahrzeug betreffen. Falls beispielsweise das Nutzungsverhalten einer Funktion zum Ansteuern der Sitzheizung eines Fahrzeugsitzes des Kraftfahrzeugs überprüft wird, kann es sinnvoll sein, aufgrund von jahreszeitbedingten Schwankungen des Nutzungsverhaltens der Sitzheizung ein größeres Zeitintervall zu betrachten, beispielsweise ein ganzes Jahr, im Vergleich zu einer Funktion, die jahreszeitunabhängig ist, wie beispielsweise der Wetterdienst. Alternativ oder zusätzlich zu einer Größe des Zeitintervalls kann das Zeitintervall auf vorgegebene Monate und/oder Jahreszeiten begrenzt sein. Es können dann im genannten Beispiel die Nutzungsdaten nur auf Basis der Nutzung in Wintermonaten ermittelt werden. Letztendlich können in der Steuervorrichtung für jede Funktion individuelle Zeitintervalle vorgegeben sein, für die jeweils das Nutzungsverhalten zum Bereitstellen der Nutzungsdaten ausgewertet wird.

Eine Ausführungsform sieht vor, dass eine Kommunikationsverbindung zwischen einer Kommunikationsschnittstelle des Kraftfahrzeugs und einer Kommunikationsschnittstelle einer externen Recheneinrichtung aufgebaut wird. Die Kommunikationsverbindung ist bevorzugt eine kabellose, insbesondere eine drahtlose Kommunikationsverbindung. Die Kommunikationsverbindung zwischen dem Kraftfahrzeug und der externen Recheneinrichtung kann über ein drahtloses lokales Netzwerk (WLAN für Wireless Local Area Network), eine Bluetooth-Verbindung und/oder ein mobiles Datennetzwerk, beispielsweise basierend auf dem Mobilfunkstandard Long Term Evolution (LTE), Long Term Evolution Advanced (LTE-A), Fifth Generation (5G) oder Sixth Generation (6G), vorgesehen sein. Die externe Recheneinrichtung kann alternativ als Backend oder Server bezeichnet werden. Die externe Recheneinrichtung ist außerhalb des Kraftfahrzeugs angeordnet.

Über die aufgebaute Kommunikationsverbindung werden die aktivierte Entfernungsoption beschreibende Anfragedaten an die externe Recheneinrichtung übermittelt. Die Anfragedaten beschreiben, welche Funktion gemäß der aktivierten Entfernungsoption nicht mehr für die Steuervorrichtung gewünscht ist, das heißt, welche Funktionen entfernt werden sollen. Die Anfragedaten umfassen eine Anfrage an die externe Recheneinrichtung, eine neue Software, das heißt die zweite Software, bereitzustellen, wobei die zweite Software gemäß den Vorgaben der aktivierten Entfernungsoption erzeugt wurde. Alternativ können die Anfragedaten als die aktivierte Entfernungsoption beschreibende Daten bezeichnet werden. Vom Kraftfahrzeug wird daraufhin über die aufgebaute Kommunikationsverbindung die gemäß der ermittelten Anfragedaten erzeugte zweite Software empfangen. Das Kraftfahrzeug sendet somit die Anfragedaten an die externe Recheneinrichtung, die externe Recheneinrichtung kann die Anfragedaten empfangen und daraufhin die zweite Software an das Kraftfahrzeug übermitteln. Es wird letztendlich sichergestellt, dass ohne großen Ressourcenaufwand im Kraftfahrzeug die zweite Software bereitgestellt werden kann, da die externe Recheneinrichtung involviert wird.

Eine zusätzliche Ausführungsform sieht vor, dass die zweite Software mittels der externen Recheneinrichtung erzeugt wird. Die externe Recheneinrichtung kann beispielsweise einen Software-Erzeugungsalgorithmus aufweisen, bei dessen Durchführen auf Basis der empfangenen Anfragedaten die zweite Software bereitgestellt werden kann. Bevorzugt werden zum Erzeugen der zweiten Software in einem Programmcode der ersten Software automatisch Änderungen vorgenommen. Die zweite Software wird insbesondere kompiliert, das heißt ist als Softwareblock ausführbar. Mit anderen Worten wird nicht einfach nur in der Steuervorrichtung des Kraftfahrzeugs die nicht mehr gewünschte und zu entfernende Funktion gelöscht, sondern es wird tatsächlich eine neue Software für die Steuervorrichtung, die alle noch vorhandenen Funktionen für die Steuervorrichtung umfasst, erzeugt und bereitgestellt. Hierdurch kann zuverlässig erreicht werden, dass die letztendlich von der Steuervorrichtung betriebene zweite Software zuverlässig erzeugt wurde und daher tatsächlich ausführbar ist.

Es kann alternativ oder zusätzlich dazu vorgesehen sein, dass die Steuervorrichtung des Kraftfahrzeugs die zweite Software selbst erzeugt.

Es kann in einer Ausführungsform vorgesehen sein, dass die Funktion zum Entfernen von der Steuervorrichtung deinstalliert wird. Es kann also vorgesehen sein, dass die Funktion vollständig deinstalliert wird, sodass mit der zweiten Software keine Möglichkeit mehr besteht, dass die Funktion ausgeführt werden kann. Bei der Deinstallation kann es ferner vorgesehen sein, dass Informationen zu einem bisherigen Nutzen der Funktion ebenfalls gelöscht werden. Letztendlich wird dadurch ein Zustand erreicht, gemäß dem davon ausgegangen wird, dass die Funktion nicht im Kraftfahrzeug vorgesehen ist und/oder nie im Kraftfahrzeug vorgesehen war. Hierdurch kann besonders viel Speicherplatz im Speicher der Steuervorrichtung freigemacht werden.

Darüber hinaus sieht es eine Ausführungsform vor, dass Inhaltsdaten, die bei einer Verwendung der Funktion erzeugt wurden, vor der Deinstallation in einer Speichereinrichtung gespeichert werden. Es kann also vorgesehen sein, dass operative Daten für die Funktion gesichert werden, bevor die Deinstallation der Funktion in der Steuervorrichtung erfolgt. Die Speichereinrichtung ist beispielsweise eine externe Speichereinrichtung, die außerhalb des Kraftfahrzeugs angeordnet ist. Die Speichereinrichtung kann von der externen Recheneinrichtung umfasst sein. In diesem Fall können die Inhaltsdaten beispielsweise über die Kommunikationsverbindung zwischen dem Kraftfahrzeug und der externen Recheneinrichtung an diese übermittelt werden. Die Inhaltsdaten beschreiben beispielsweise das bisherige Nutzungsverhalten der Funktion, wie beispielsweise benutzerspezifische Einstellungen, Vorlieben und/oder eine Benutzungshistorie. Hierdurch kann sichergestellt werden, dass keine privaten und gegebenenfalls in der Zukunft wieder interessante Daten durch die Deinstallation verloren gehen. Dies kann vom Benutzer als besonders komfortabel wahrgenommen werden.

Gemäß einer Ausführungsform ist es vorgesehen, dass eine Funktionsübersicht für einen Benutzer des Kraftfahrzeugs bereitgestellt wird, in der die entfernte Funktion als aktuell entfernte Funktion gekennzeichnet ist. Die Funktionsübersicht kann beispielsweise als Liste auf dem Bildschirm als Ausgabeeinrichtung angezeigt werden. Die Funktionsübersicht kann beispielsweise alle tatsächlich bereitgestellten sowie alle entfernten Funktionen der Steuervorrichtung aufweisen. Die entfernten Funktionen sind hierbei bevorzugt als solche gekennzeichnet, indem sie beispielsweise optisch hervorgehoben, optisch abgesetzt und/oder farblich markiert dargestellt sind. Falls sie optisch abgesetzt dargestellt sind, können sie beispielsweise optisch schwerer erkennbar sein, beispielsweise durch Darstellung in einer im Vergleich zu den bereitgestellten Funktionen helleren Farben. Hierdurch wird signalisiert, dass die jeweilige entfernte Funktion an sich existiert, aber aktuell nicht im Kraftfahrzeug bereitgestellt und somit verfügbar ist.

Für die aktuell entfernte Funktion wird eine Installationsoption zum Installieren der Funktion auf der Steuervorrichtung bereitgestellt. Die Installationsoption kann beispielsweise mittels der Ausgabeeinrichtung bereitgestellt und mittels der Betätigungseinrichtung ausgewählt, das heißt manuell aktiviert, werden. Bei der Aktivierung der Installationsoption wird eine dritte Software für die Steuervorrichtung bereitgestellt, mittels derer die Funktion, die aktuell entfernt ist und die gemäß der Installationsoption wieder installiert werden soll, ausführbar ist. Es kann also nach Erfassen des Aktivierens der Installationsoption diese Information als neue Anfragedaten an die externe Recheneinrichtung übermittelt werden, woraufhin diese beispielsweise die dritte Software erzeugt und diese an das Kraftfahrzeug übermittelt. Die dritte Software ist von der zweiten Software verschieden. Die Steuervorrichtung wird daraufhin gemäß der dritten Software betrieben. Die dritte Software ersetzt in diesem Fall die zweite Software. Es ist also möglich, dass deinstallierte Funktionen jederzeit wieder installiert werden können. Dies setzt natürlich voraus, dass ausreichend Ressourcen in der Steuervorrichtung bereitgestellt sind, das heißt, der freie Speicherplatz des Speichers und/oder die Prozessorauslast der Steuervorrichtung dies zulassen. Hierdurch wird sichergestellt, dass das Deinstallieren und somit das Entfernen einzelner Funktionen wieder rückgängig gemacht werden kann und somit der Benutzer nicht vor einer absoluten Entscheidung steht, wenn er mit der Entfernungsoption konfrontiert wird.

Es kann in einer Ausführungsform vorgesehen sein, dass überprüft wird, ob zu der gemäß der dritten Software wieder ausführbaren Funktion Inhaltsdaten gespeichert wurden. Falls dies der Fall ist, das heißt, falls für diese Funktion Inhaltsdaten in der Speichereinrichtung hinterlegt wurden, werden die gespeicherten Inhaltsdaten von der Speichereinrichtung für die Steuervorrichtung bereitgestellt. Sie können also beispielsweise über die Kommunikationsverbindung von der Speichereinrichtung an das Kraftfahrzeug übertragen werden und somit wieder in die Steuervorrichtung geladen werden. Sie können dann beispielsweise in einer Speichereinrichtung der Steuervorrichtung gespeichert sein. Die benutzerspezifischen Informationen, die zu der Funktion vor deren Deinstallation noch gesichert wurden, können somit wieder ins Kraftfahrzeug geladen werden. Hierdurch ist die zuvor entfernte Funktion wieder vollständig und unter Berücksichtigung der für die Funktion bereits bekannten benutzerspezifischen Daten ausführbar, was der Benutzer als besonders komfortabel wahrnehmen kann.

Ein weiterer Aspekt der Erfindung betrifft ein Kraftfahrzeug mit einer Steuervorrichtung. Das Kraftfahrzeug ist dazu ausgebildet, die für das Kraftfahrzeug vorgesehenen Schritte des Verfahrens, wie es oben beschrieben wurde, durchzuführen. Das erfindungsgemäße Kraftfahrzeug ist bevorzugt als Kraftwagen, insbesondere als Personenkraftwagen oder Lastkraftwagen, oder als Personenbus oder Motorrad ausgestaltet.

Es kann ferner ein System aus dem Kraftfahrzeug und der externen Recheneinrichtung vorgesehen sein. Dieses System aus Kraftfahrzeug und externer Recheneinrichtung ist dann dazu ausgebildet, das oben beschriebene Verfahren durchzuführen.

Zu der Erfindung gehören auch Ausführungsformen des erfindungsgemäßen Kraftfahrzeugs und Systems, die Merkmale aufweisen, wie sie bereits im Zusammenhang mit den Ausführungsformen des erfindungsgemäßen Verfahrens beschrieben worden sind. Aus diesem Grund sind die entsprechenden Ausführungsformen des erfindungsgemäßen Kraftfahrzeugs und Systems hier nicht noch einmal beschrieben.

Zu der Erfindung gehört auch die Steuervorrichtung für das Kraftfahrzeug. Die Steuervorrichtung kann eine Datenverarbeitungsvorrichtung oder eine Prozessoreinrichtung aufweisen, die dazu eingerichtet ist, eine Ausführungsform des erfindungsgemäßen Verfahrens durchzuführen. Die Prozessoreinrichtung kann hierzu zumindest einen Mikroprozessor und/oder zumindest einen Mikrocontroller und/oder zumindest einen FPGA (Field Programmable Gate Array) und/oder zumindest einen DSP (Digital Signal Processor) aufweisen. Des Weiteren kann die Prozessoreinrichtung Programmcode aufweisen, der dazu eingerichtet ist, bei Ausführen durch die Prozessoreinrichtung die Ausführungsform des erfindungsgemäßen Verfahrens durchzuführen. Der Programmcode kann in einem Datenspeicher der Prozessoreinrichtung gespeichert sein.

Als eine weitere Lösung umfasst die Erfindung auch ein computerlesbares Speichermedium, umfassend Befehle, die bei der Ausführung durch einen Computer oder einen Computerverbund diesen veranlassen, eine Ausführungsform des erfindungsgemäßen Verfahrens auszuführen. Das Speichermedium kann z.B. zumindest teilweise als ein nicht-flüchtiger Datenspeicher (z.B. als eine Flash-Speicher und/oder als SSD - solid state drive) und/oder zumindest teilweise als ein flüchtiger Datenspeicher (z.B. als ein RAM - random access memory) ausgestaltet sein. Durch den Computer oder Computerverbund kann eine Prozessorschaltung mit zumindest einem Mikroprozessor bereitgestellt sein. Die Befehle können als Binärcode oder Assembler und/oder als Quellcode einer Programmiersprache (z.B. C) bereitgestellt sein.

Die Erfindung wird durch die unabhängigen Ansprüche definiert, und bevorzugte Merkmale sind in den abhängigen Ansprüchen angegeben.

Im Folgenden sind Ausführungsbeispiele der Erfindung beschrieben. Hierzu zeigt:
- Fig. 1: eine schematische Darstellung eines Kraftfahrzeugs mit einer Steuervorrichtung; und
- Fig. 2: in schematischer Darstellung einen Signalflussgraphen für ein Verfahren zum Betreiben der Steuervorrichtung des Kraftfahrzeugs.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

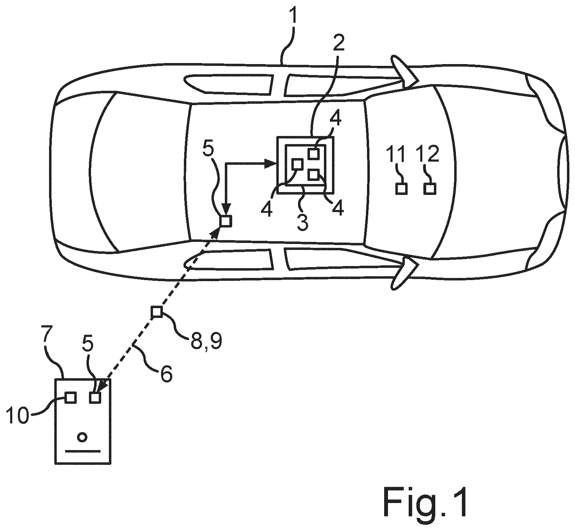

In Fig. 1 ist ein Kraftfahrzeug 1 skizziert, das eine Steuervorrichtung 2 aufweist. In der Steuervorrichtung 2 ist eine erste Software 3 bereitgestellt, die beispielsweise ein Ausführen von zumindest einer Funktion 4 des Kraftfahrzeugs 1, insbesondere von mehrere Funktionen 4, ermöglicht. Hier sind rein exemplarisch drei Funktionen 4 skizziert, die von der ersten Software 3 bereitgestellt werden. Die jeweilige Funktion 4 kann eine Komfortfunktion sein, beispielsweise betreffend einen Sprachassistenten, ein Navigationssystem, eine Klimaanlage und/oder ein Multimediasystem des Kraftfahrzeugs 1. Die jeweilige Funktion 4 kann ferner eine fahrrelevante und/oder sicherheitsrelevante Funktion 4 für das Kraftfahrzeugs 1 sein. Im Folgenden kann auf die Funktion 4 fokussiert werden, die eine reine Komfortfunktion ist und daher prinzipiell von der Steuervorrichtung 2 entfernt werden kann, ohne eine Funktionsfähigkeit des Kraftfahrzeugs 1 als Fortbewegungsmittel zu beeinträchtigen.

Das Kraftfahrzeug 1 weist eine Kommunikationsschnittstelle 5 auf, mittels derer eine Kommunikationsverbindung 6 zu einer Kommunikationsschnittstelle 5 einer externen Recheneinrichtung 7 aufgebaut sein kann. Die Kommunikationsverbindung 6 ist beispielsweise eine kabellose und insbesondere drahtlose Verbindung. Über die Kommunikationsverbindung 6 kann beispielsweise eine zweite Software 8 von der externen Recheneinrichtung 7 an das Kraftfahrzeug 1 übermittelt werden und/oder Inhaltsdaten 9 können vom Kraftfahrzeug 1 an beispielsweise eine Speichereinrichtung 10 der externen Recheneinrichtung 7 übermittelt werden. Die externe Recheneinrichtung 7 ist beispielsweise ein Backend und/oder ein Server.

Das Kraftfahrzeug 1 kann eine Ausgabeeinrichtung 11 aufweisen, die beispielsweise als ein Bildschirm, insbesondere als ein berührungssensitiver Bildschirm, und/oder als eine Lautsprechereinrichtung mit zumindest einem Lautsprecher ausgebildet sein kann. Das Kraftfahrzeug 1 kann des Weiteren eine Betätigungseinrichtung 12 aufweisen, wie beispielsweise einen Knopf, einen Schalter, einen Drehdrückschalter, ein Element auf dem berührungssensitiven Bildschirm, ein Spracheingabesystem basierend auf einer Mikrofoneinrichtung, die zumindest ein Mikrofon aufweist und zur Erfassung einer Spracheingabe eines Benutzers des Kraftfahrzeugs 1 ausgebildet ist, und/oder ein Gestenerkennungssystem basierend auf einer Kameraeinrichtung mit zumindest einer Kamera zur Erfassung einer Geste des Benutzers. Die Ausgabeeinrichtung 11 und/oder die Betätigungseinrichtung 12 können Komponenten des Kraftfahrzeugs 1 sein. Alternativ oder zusätzlich dazu können sie von einem mobilen Endgerät umfasst sein, das dem Benutzer des Kraftfahrzeugs 1 zugeordnet ist. Das mobile Endgerät kann im Kraftfahrzeug 1 positioniert sein und/oder über eine Applikation mit einem Benutzerprofil des Benutzers des Kraftfahrzeugs 1 verknüpft sein. Das mobile Endgerät ist beispielsweise ein Smartphone oder ein Tablet. Eine Ausgabe an sowie eine manuelle Reaktion des Benutzers im Rahmen des im Folgenden beschriebenen Verfahrens erfolgen über die Ausgabeeinrichtung 11 beziehungsweise die Betätigungseinrichtung 12.

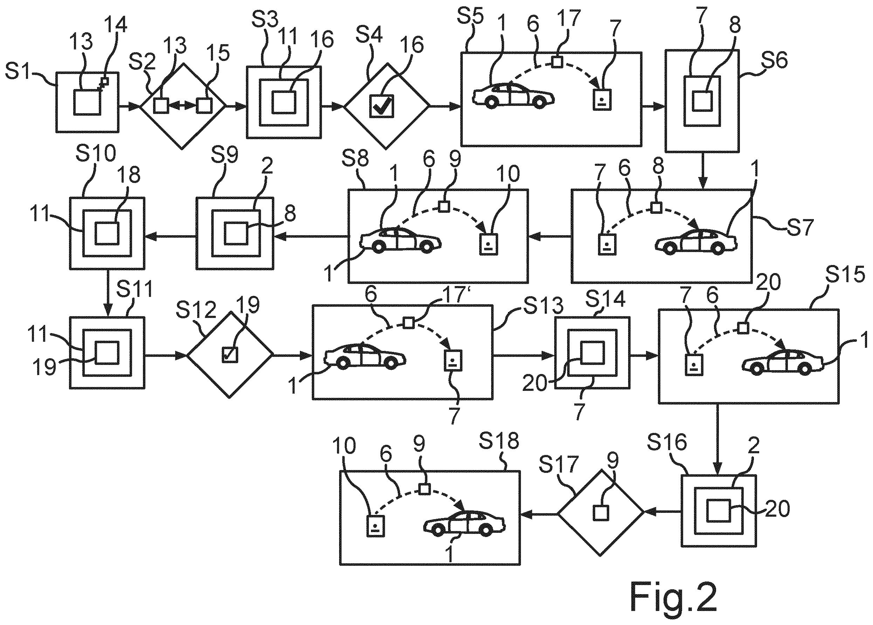

In Fig. 2 ist ein Verfahren zum Betreiben der Steuervorrichtung 2 für das Kraftfahrzeug 1 skizziert. In einem Verfahrensschritt S1 erfolgt ein Ermitteln von Nutzungsdaten 13, die für jede der Funktionen 4 ein Nutzungsverhalten beschreiben. Die Nutzungsdaten 13 geben folglich an, wie oft die Funktion 4 zum Beispiel in einem vorgegebenen Zeitintervall 14 verwendet wurde. Das Zeitintervall 14 beträgt beispielsweise einen Monat, drei Monate, sechs Monate oder ein Jahr. Die ermittelten Nutzungsdaten 13 beschreiben also das Nutzungsverhalten der jeweiligen Funktion 4 während des vorgegebenen Zeitintervalls 14, wobei das Zeitintervall 14 funktionsabhängig gewählt sein kann. Die Nutzungsdaten 13 werden für alle Funktionen 4 bereitgestellt, die von der der Steuervorrichtung 2 bereitgestellten ersten Software 3 bereitgestellt werden können, das heißt, für die Funktionen 4, die im Kraftfahrzeug 1 von der Steuervorrichtung 2 bereitstellbar und somit ausführbar sind.

In einem Verfahrensschritt S2 erfolgt ein Überprüfen für die jeweilige Funktion 4, ob gemäß der ermittelten Nutzungsdaten 13 die Nutzung unterhalb einer vorgegebenen Minimalnutzung 15 liegt. Für jede Funktion 4, für die beim Überprüfen im Verfahrensschritt S2 festgestellt wurde, dass die Nutzung unterhalb der vorgegebenen Minimalnutzung 15 liegt, erfolgt in einem Verfahrensschritt S3 ein Bereitstellen einer Entfernungsoption 16 zum zumindest teilweise Entfernen der Funktion 4 von der Steuervorrichtung 2. Die Minimalnutzung 15 kann beispielsweise bei zumindest einer Nutzung liegen. In diesem Fall wird nur die Funktion 4, die überhaupt nicht genutzt wurde, von der Entfernungsoption 16 umfasst. Alternativ oder zusätzlich dazu kann eine höhere Minimalnutzung 15 gewählt sein, sodass die Funktion 4 beispielsweise mindestens drei Mal oder fünf Mal innerhalb des Zeitintervalls 14 genutzt werden musste und sie nur falls dies nicht der Fall ist von der Entfernungsoption 16 umfasst ist. Die Entfernungsoption 16 wird mittels der Ausgabeeinrichtung 11 für den Benutzer des Kraftfahrzeugs 1 optisch sichtbar angezeigt und/oder akustisch wahrnehmbar ausgegeben werden.

Die Entfernungsoption 16 kann daraufhin mittels der Betätigungseinrichtung 12 vom Benutzer manuell aktiviert werden. In einem Verfahrensschritt S4 wird überprüft, ob die bereitgestellte Entfernungsoption 16 aktiviert wurde. Falls dies der Fall ist, kann in einem Verfahrensschritt S5 beispielsweise ein Übermitteln von Anfragedaten 17, die die aktivierte Entfernungsoption 16 beschreiben, vom Kraftfahrzeug 1 an die externe Recheneinrichtung 7 über die Kommunikationsverbindung 6 erfolgen. Hierfür kann es vorgesehen sein, dass zunächst zwischen der Kommunikationsschnittstelle 5 des Kraftfahrzeugs 1 und der Kommunikationsschnittstelle 5 der externen Recheneinrichtung 7 die Kommunikationsverbindung 6 aufgebaut wird.

In einem Verfahrensschritt S6 wird daraufhin die zweite Software 8 mittels der externen Recheneinrichtung 7 erzeugt. Bei einem Anwenden der zweiten Software 8 ist die jeweilige entfernte Funktion 4 nicht ausführbar. Die zweite Software 8 unterscheidet sich somit von der ersten Software 3 dadurch, dass sie die gemäß der Entfernungsoption 16 als nicht mehr gewünschte Funktion 4 nicht mehr umfasst. Die Funktion 4, die entfernt werden soll, ist dann also nicht mehr Teil einer Funktionalität des Kraftfahrzeugs 1, sobald die Steuervorrichtung 2 mittels der zweiten Software 8 betrieben wird. In einem Verfahrensschritt S7 kann die von der externen Recheneinrichtung 7 erzeugte zweite Software 8 von der externen Recheneinrichtung 7 über die Kommunikationsverbindung 6 an das Kraftfahrzeug 1 übermittelt werden.

In einem Verfahrensschritt S8 kann ein Übermitteln der Inhaltsdaten 9 vom Kraftfahrzeug 1 an die Speichereinrichtung 10, die hier eine Komponente der externen Recheneinrichtung 7 ist, über die Kommunikationsverbindung 6 erfolgen. Die Speichereinrichtung 10 kann alternativ oder zusätzlich dazu eine von der externen Recheneinrichtung 7 räumlich getrennte Einrichtung sein, die im Kraftfahrzeug 1 oder extern des Kraftfahrzeugs 1 angeordnet sein kann. In diesem Fall kann die Kommunikationsverbindung 6 direkt zwischen dem Kraftfahrzeug 1 und einer Kommunikationsschnittstelle 5 der Speichereinrichtung 10 aufgebaut sein. Die Inhaltsdaten 9 wurden bei einer bisherigen Verwendung der Funktion 4 erzeugt und werden vor deren Entfernen durch das Übermitteln an die Speichereinrichtung 10 in der Speichereinrichtung 10 gespeichert und somit gesichert.

In einem Verfahrensschritt S9 wird die Steuervorrichtung 2 gemäß der zweiten Software 8 betrieben. Mit anderen Worten wird die zweite Software 8, die die zu entfernende Funktion 4 nicht mehr aufweist, anstelle der ersten Software 3 auf die Steuervorrichtung 2 geladen, sodass diese nun nur noch gemäß der zweiten Software 8 betrieben wird. Dies bewirkt, dass die Funktion 4 letztendlich von der Steuervorrichtung 2 deinstalliert wurde. Zuvor können jedoch, wie bereits beschrieben, im Verfahrensschritt S8, die Inhaltsdaten 9 zu dieser Funktion 4 in die Speichereinrichtung 10 ausgelagert worden sein.

In einem Verfahrensschritt S10 wird eine Funktionsübersicht 18 für den Benutzer des Kraftfahrzeugs 1 bereitgestellt. Dies erfolgt beispielsweise mittels der Ausgabeeinrichtung 11. In der Funktionsübersicht 18 ist die entfernte Funktion 4 als solche gekennzeichnet. Die Funktionsübersicht 18 ist bevorzugt eine Übersicht über alle aktuell verfügbaren Funktionen 4 sowie alle prinzipiell im Kraftfahrzeug 1 bereitstellbaren jedoch aktuell entfernten Funktionen 4. In einem Verfahrensschritt S11 kann für die aktuell entfernte Funktion 4 eine Installationsoption 19 mittels der Ausgabeeinrichtung 11 bereitgestellt werden. Die Installationsoption 19 ist zum erneuten Installieren der Funktion 4 auf der Steuervorrichtung 2 gedacht, das heißt, bei der Aktivierung der Installationsoption 19 kann die zuvor entfernte Funktion 4 wieder für die Steuervorrichtung 2 bereitgestellt werden.

In einem Verfahrensschritt S12 kann daher überprüft werden, ob die Installationsoption 19 aktiviert wurde. Falls dies der Fall ist, erfolgt zum Beispiel in einem Verfahrensschritt S13 ein Übermitteln von neuen Anfragedaten 17', die die aktivierte Installationsoption 19 beschreiben, vom Kraftfahrzeug 1 an die externe Recheneinrichtung 7. In einem Verfahrensschritt S14 kann darauf mittels der externen Recheneinrichtung 7 eine dritte Software 20 erzeugt werden, bei deren Anwenden die wieder gewünschte Funktion 4 gemäß der Installationsoption 19 wieder ausführbar ist. Die dritte Software 20 unterscheidet sich zumindest teilweise von der zweiten Software 8. In einem Verfahrensschritt S15 kann die dritte Software 20 von der externen Recheneinrichtung 7 über die Kommunikationsverbindung 6 an das Kraftfahrzeug 1 übermittelt werden. In einem Verfahrensschritt S16 kann nun die Steuervorrichtung 2 des Kraftfahrzeugs 1 gemäß der dritten Software 20 betrieben werden.

Es kann in einem Verfahrensschritt S17 überprüft werden, ob zu der gemäß der dritten Software 20 wieder ausführbaren Funktion 4 zuvor Inhaltsdaten 9 gespeichert worden sind. Falls dies der Fall ist, kann es in einem Verfahrensschritt S18 vorgesehen sein, dass die in der Speichereinrichtung 10 gespeicherten Inhaltsdaten 9 über die Kommunikationsverbindung 6 an das Kraftfahrzeug 1 übermittelt werden und somit der Steuervorrichtung 2 bereitgestellt werden, zum Beispiel zum Durchführen der Funktion 4 gemäß den nun wieder bereitgestellten Inhaltsdaten 9.

Insgesamt zeigen die Beispiele die Freigabe von Ressourcen durch die Installation einer ausgewählten oder mehreren ausgewählten Funktionen 4 auf Basis des Nutzverhaltens der Funktionen 4. Es erfolgt hierfür ein Monitoring des Fahrzeugnutzungsverhalten, das heißt, das Ermitteln und Überprüfen der Nutzungsdaten 13. Dieses kann in der externen Recheneinrichtung 7 ausgewertet werden und/oder in der Steuervorrichtung 2 erfolgen. Über eine frei zu definierende Zeitspanne, das heißt über das Zeitintervall 14, werden nicht genutzte Funktionen 4 dem Benutzer zur Deinstallation angeboten, und zwar mittels der Entfernungsoption 16. Bei Entscheid zum Entfernen können die Funktionen 4 deinstalliert werden, wie beispielsweise ein Wetterdienst oder eine Information über freie Parkplätze an einem Zielort des Navigationssystems. Ressourcen der Steuervorrichtung 2 stehen dann für neue Funktionen 4 zur Verfügung, welche beispielsweise per Update in das Kraftfahrzeug 1 eingebracht werden können. Die deinstallierte Funktion 4 kann jedoch, vorausgesetzt die Ressourcen stehen hierzu zur Verfügung, jederzeit wieder installiert werden, das heißt, sie kann über die Installationsoption 19 und die dritte Software 20 wieder auf das Kraftfahrzeug 1, das heißt auf die Steuervorrichtung 2 des Kraftfahrzeugs 1, aufgespielt werden.

## Patentansprüche

1. Verfahren zum Betreiben einer Steuervorrichtung (2) für ein Kraftfahrzeug (1), umfassend folgende Schritte:
- Ermitteln (S1) von Nutzungsdaten (13), die für eine jeweilige Funktion (4), die von einer der Steuervorrichtung (2) bereitgestellten ersten Software (3) bereitstellbar ist, ein Nutzungsverhalten beschreibt, wobei die ermittelten Nutzungsdaten (13) das Nutzungsverhalten während eines vorgegebenen Zeitintervalls (14) beschreiben, wobei das Zeitintervall (14) funktionsabhängig ist;
- Überprüfen (S2) für die jeweilige Funktion (4), ob gemäß der ermittelten Nutzungsdaten (13) die Nutzung unterhalb einer vorgegebenen Minimalnutzung (15) liegt;
- für jede Funktion (4), für die beim Überprüfen festgestellt wurde, dass die Nutzung unterhalb der vorgegebenen Minimalnutzung (15) liegt, Bereitstellen (S3) einer Entfernungsoption (16) zum zumindest teilweisen Entfernen der Funktion (4) von der Steuervorrichtung (2);
- falls die bereitgestellte Entfernungsoption (16) aktiviert wird, Bereitstellen (S8) einer zweiten Software (8) für die Steuervorrichtung (2), mittels derer die jeweilige entfernte Funktion (4) nicht ausführbar ist; und
- Betreiben (S9) der Steuervorrichtung (2) mittels der bereitgestellten zweiten Software (8).

2. Verfahren nach Anspruch 1, wobei eine Kommunikationsverbindung (6) zwischen einer Kommunikationsschnittstelle (5) des Kraftfahrzeugs (1) und einer Kommunikationsschnittstelle (5) einer externen Recheneinrichtung (7) aufgebaut wird und über die Kommunikationsverbindung (6) die aktivierte Entfernungsoption (16) beschreibende Anfragedaten (17) an die externe Recheneinrichtung (7) übermittelt werden (S5) und vom Kraftfahrzeug (1) die gemäß der übermittelten Anfragedaten (17) erzeugte zweite Software (8) empfangen wird (S7).

3. Verfahren nach Anspruch 2, wobei die zweite Software (8) mittels der externen Recheneinrichtung (7) erzeugt wird (S6).

4. Verfahren nach einem der vorhergehenden Ansprüche, wobei die Funktion (4) zum Entfernen von der Steuervorrichtung (2) deinstalliert wird.

5. Verfahren nach Anspruch 4, wobei Inhaltsdaten (9), die bei einer Verwendung der Funktion (4) erzeugt wurden, vor der Deinstallation in einer Speichereinrichtung (10) gespeichert werden (S8).

6. Verfahren nach einem der vorhergehenden Ansprüche, wobei eine Funktionsübersicht (18) für einen Benutzer des Kraftfahrzeugs (1) bereitgestellt wird (S10), in der die entferne Funktion (4) als aktuell entfernte Funktion (4) gekennzeichnet ist, wobei für die aktuell entfernte Funktion (4) eine Installationsoption (19) zum Installieren der Funktion (4) auf der Steuervorrichtung (2) bereitgestellt wird (S11), bei deren Aktivierung eine dritte Software (20) für die Steuervorrichtung (2) bereitgestellt wird (S16), mittels derer diese Funktion (4) wieder ausführbar ist.

7. Verfahren nach Anspruch 5 und 6, wobei überprüft wird (S17), ob zu der gemäß der dritten Software (20) wieder ausführbaren Funktion (4) Inhaltsdaten (9) gespeichert wurden, und, falls dies der Fall ist, die gespeicherten Inhaltsdaten (9) von der Speichereinrichtung (10) für die Steuervorrichtung (2) bereitgestellt werden (S18).

8. Kraftfahrzeug (1) mit einer Steuervorrichtung (2), das dazu ausgebildet ist, die für das Kraftfahrzeug (1) vorgesehenen Schritte eines Verfahrens nach einem der vorhergehenden Ansprüche durchzuführen.

## Claims

1. A method for operating a control device (2) for a motor vehicle (1), comprising the following steps:
- ascertaining (S1) utilization data (13), which describes a utilization behavior for a respective function (4), which can be provided by a first software (3) provided to the control device (2), wherein the ascertained utilization data (13) describes the utilization behavior during a preset time interval (14), wherein the time interval (14) is dependent on function;
- examining (S2) for the respective function (4), if the utilization is below a preset minimum utilization (15) according to the ascertained utilization data (13);
- for each function (4), for which it has been determined in examining that the utilization is below the preset minimum utilization (15), providing (S3) a removal option (16) for at least partially removing the function (4) from the control device (2);
- if the provided removal option (16) is activated, providing (S8) a second software (8) for the control device (2), by means of which the respective removed function (4) is not executable; and
- operating (S9) the control device (2) by means of the provided second software (8).

2. The method according to claim 1, wherein a communication link (6) between a communication interface (5) of the motor vehicle (1) and a communication interface (5) of an external computing device (7) is established and query data (17) describing the activated removal option (16) is transmitted (S5) to the external computing device (7) via the communication link (6), and the second software (8) generated according to the transmitted query data (17) is received (S7) by the motor vehicle (1).

3. The method according to claim 2, wherein the second software (8) is generated (S6) by means of the external computing device (7).

4. The method according to any one of the preceding claims, wherein the function (4) is uninstalled for removing from the control device (2).

5. The method according to claim 4, wherein content data (9), which has been generated upon a use of the function (4), is stored (S8) in a storage device (10) before the uninstallation.

6. The method according to any one of the preceding claims, wherein a function overview (18) is provided (S10) for a user of the motor vehicle (1), in which the removed function (4) is marked as a currently removed function (4), wherein an installation option (19) for installing the function (4) on the control device (2) is provided (S11) for the currently removed function (4), upon activation of which a third software (20) is provided (S16) for the control device (2), by means of which this function (4) is again executable.

7. The method according to claim 5 and 6, wherein it is examined (S17), if content data (9) has been stored to the function (4) again executable according to the third software (20), and if this is the case, the stored content data (9) is provided (S18) for the control device (2) from the storage device (10).

8. A motor vehicle (1) with a control device (2), which is formed to perform the steps, provided for the motor vehicle (1), of a method according to any one of the preceding claims.

## Revendications

1. Procédé pour faire fonctionner un dispositif de commande (2) pour un véhicule à moteur (1), comprenant les étapes suivantes consistant à :
- déterminer (S1) des données d'utilisation (13) qui décrivent, pour une fonction (4) respective, un comportement d'utilisation qui peut être fourni par un premier logiciel (3) fourni par le dispositif de commande (2), les données d'utilisation (13) déterminées décrivant le comportement d'utilisation pendant un intervalle de temps (14) prédéterminé, l'intervalle de temps (14) étant dépendant de la fonction ;
- vérifier (S2) pour la fonction (4) respective que, sur la base des données d'utilisation (13) déterminées, l'utilisation est inférieure à une utilisation minimale (15) prédéterminée ;
- pour chaque fonction (4) pour laquelle il a été déterminé, lors de la vérification, que l'utilisation est inférieure à l'utilisation minimale (15) prédéfinie, fournir (S3) une option de suppression (16) pour supprimer au moins partiellement la fonction (4) du dispositif de commande (2) ;
- si l'option de suppression (16) fournie est activée, fournir (S8) un deuxième logiciel (8) pour le dispositif de commande (2) au moyen duquel la fonction (4) supprimée respective ne peut pas être exécutée ; et
- faire fonctionner (S9) le dispositif de commande (2) au moyen du deuxième logiciel (8) fourni.

2. Procédé selon la revendication 1, dans lequel une liaison de communication (6) est établie entre une interface de communication (5) du véhicule à moteur (1) et une interface de communication (5) d'un dispositif de calcul externe (8), et des données de requête (17) décrivant l'option de suppression (16) activée sont transmises (S5) au dispositif de calcul externe (7) via la liaison de communication (6), et le deuxième logiciel (8) généré sur la base des données de requête (17) transmises est reçu (S7) par le véhicule à moteur (1).

3. Procédé selon la revendication 2, dans lequel le deuxième logiciel (8) est généré (S6) au moyen du dispositif de calcul externe (7).

4. Procédé selon l'une des revendications précédentes, dans lequel la fonction (4) est désinstallée pour la supprimer du dispositif de commande (2).

5. **Procédure** selon la revendication 4, dans lequel des données de contenu (9) qui ont été générées lors d'une utilisation de la fonction (4) sont stockées (S8) dans un dispositif de stockage (10) avant la désinstallation.

6. Procédé selon l'une des revendications précédentes, dans lequel un aperçu fonctionnel (18) est fourni (S10) à un utilisateur du véhicule à moteur (1), la fonction supprimée (4) étant marquée comme une fonction actuellement supprimée (4), une option d'installation (19) étant fournie (S11) pour la fonction actuellement supprimée (4) afin d'installer la fonction (4) sur le dispositif de commande (2), lors de son activation, un troisième logiciel (20) étant fourni (S16) pour le dispositif de commande (2) au moyen duquel cette fonction (4) peut être réexécutée.

7. Procédé selon les revendications 5 et 6, dans lequel il est vérifié (S17) que les données de contenu (9) concernant la fonction réexécutable sur la base du troisième logiciel (20) ont été stockées et, si tel est le cas, les données de contenu (9) stockées sont fournies (S18) par le dispositif de stockage (10) pour le dispositif de commande.

8. Véhicule à moteur (1) comportant un dispositif de commande (2) configuré pour mettre en œuvre les étapes d'un procédé prévues pour le véhicule à moteur (1) selon l'une des revendications précédentes.
